# EUROPÄISCHE PATENTSCHRIFT

(11) **EP 3 265 495 B1**
(45) Veröffentlichungstag und Bekanntmachung des Hinweises auf die Patenterteilung: **15.05.2019**
(21) Anmeldenummer: 16707761.9
(22) Anmeldetag: 03.03.2016
(51) Int. Cl.: C08C 19/06, C08C 19/40, C08F 136/06, C08G 18/69, C08G 18/22, C08G 18/76

(54) **POLYBUTADIENOLE ZUR HERSTELLUNG VON GLASARTIGEN POLYURETHANEN**
POLYBUTADIENOLS FOR PRODUCING VITREOUS POLYURETHANES
POLYBUTADIÈNOLES POUR PRODUIRE DES POLYURÉTHANES VITREUX

(30) Priorität: 06.03.2015 EP 15157996
(43) Veröffentlichungstag der Anmeldung: 10.01.2018
(73) Patentinhaber: BASF SE, 67056 Ludwigshafen (DE)
(72) Erfinder: ELING, Berend, 49448 Lemförde (DE); DILCHER, Jan, 22529 Hamburg (DE); RUDNIK, Jessica, 20146 Hamburg (DE); LUINSTRA, Gerrit, 22523 Hamburg (DE)
(74) Vertreter: BASF IP Association
(86) Internationale Anmeldenummer: PCT/EP2016/054486
(87) Internationale Veröffentlichungsnummer: WO 2016/142249

(56) Entgegenhaltungen:
- EP-A2- 0 185 193
- DE-A1- 2 554 093
- DE-A1- 3 511 513
- US-A1- 2004 026 653

## Beschreibung

Die Erfindung betrifft ein Verfahren zur Herstellung von Polybutadienolen, die Polybutadienole selbst, deren Verwendung zur Herstellung von bei Raumtemperatur glasartigen Polyurethanen mit einer Glasübergangstemperatur von mindestens 15 °C sowie die mit den Polybutadienolen als Polyolkomponente hergestellten glasartigen Polyurethane.

Harte, glasartige Polymere aus Polybutadienen sind seit langem bekannt. Verwendet werden zu deren Herstellung bevorzugt epoxidierte Polybutadiene. Die Aushärtung erfolgt entweder durch Zugabe von Aminen (siehe US 2,876,214 oder DE 2833786) oder von Carbonsäurederivaten (siehe US 3,371,070 oder US 3,436,377), gegebenenfalls in Anwesenheit von Alkoholen. Für die Aushärtung sind üblicher Weise Temperaturen oberhalb von 100 °C nötig, und die Verarbeitungszeiten betragen 1 bis 2 Stunden. Um glasartige Harze zu erhalten, sind hohe Epoxidierungsgrade des Polybutadiens notwendig. Bei hohen Epoxidgehalten können jedoch bereits bei der Epoxidierung unbeabsichtigte Nebenreaktionen auftreten.

Hydrophobe Eigenschaften der Polymere werden durch die chemische Natur der Materialien beeinflusst. Polybutadiene sind als Kohlenwasserstoffe unpolar und daher ausgesprochen hydrophob. Die Verwendung von Polybutadien liefert wasserabweisende Werkstoffe mit niedrigem Quellverhalten in Wasser. Für die Verwendung in Polyurethanen müssen Polybutadiene gegenüber Isocyanatgruppen reaktive Wasserstoffatome aufweisen, z.B. Hydroxylgruppen. Polyurethane aus Polybutadienolen haben den Vorteil, dass die daraus hergestellten Werkstoffe nicht hydrolyseempfindlich sind. Das als Polyol verwendete Rizinusöl ist zwar hydrophob, jedoch ist die Esterbindung des Triglycerids hydrolyseempfindlich.

Polybutadienole können mit Isocyanaten umgesetzt werden, um vernetzte Strukturen zu erhalten. So sind flüssige hydroxyl-terminierte Polybutadiene (HTPB) seit langem bekannt und finden als Polyolkomponenten Einsatz in Polyurethanen. Kommerzielle Produkte werden durch radikalische Polymerisation (siehe US 3965140) oder ionische Polymerisation (siehe DD 160223) von 1,3-Butadien erhalten. Um HTPB zu erhalten, bedarf es bestimmter Start- und Abbruchreagenzien. Abhängig vom Herstellungsprozess werden Polyole mit unterschiedlicher Anzahl an funktionellen Gruppen erhalten. Diese Polybutadienole sind zur Herstellung von glasartigen Materialien kaum geeignet, da sie signifikante Anteile von flexiblen 1,4-Doppelbindungen aufweisen, die zu vernetzten Materialien mit Glastemperaturen unterhalb von 25 °C führen (siehe Review und zitierte Literatur in J. Macromol. Sci. Part A 2013, 50, 128-138).

Polybutadienole können aus nicht funktionalisierten Polybutadien-Oligomeren hergestellt werden. Eine Möglichkeit der Herstellung sind polymeranaloge Reaktionen durch Teilepoxidierung vorhandener Doppelbindungen und anschließender Öffnung der Epoxide durch geeignete Nucleophile, wie insbesondere Alkohole oder Amine. Die Anzahl an funktionellen Gruppen kann über den Umsatz der polymeranalogen Reaktionsschritte beliebig eingestellt werden.

Die Epoxidierung von Polydienen mit Percarbonsäuren ist beispielsweise zusammengefasst in Perera, Ind. Eng. Chem. Res 1988, 27, 2196-2203. Durch Umsetzung von Polybutadienen mit Percarbonsäuren können epoxidierte Polybutadiene erhalten werden. Dabei kann die Percarbonsäure direkt eingesetzt werden oder in situ aus der Carbonsäure und Wasserstoffperoxid generiert werden, wie in US 2,829,135 beschrieben. Als einfachste Carbonsäure wird zur Epoxidierung oft Ameisensäure eingesetzt. Durch in situ gebildete Perameisensäure werden praktisch ausschließlich 1,4-Doppelbindungen im Polybutadien epoxidiert.

Die durch polymeranaloge Reaktionen erhaltenen Polybutadienole enthalten, abhängig vom Grad der Epoxidierung und Epoxidöffnung, unterschiedliche Mengen an reaktiven Hydroxylgruppen. Die Zahl der Hydroxylgruppen bestimmt auch die Viskosität des Polyols. Eine präparativ einfache Vernetzung der Polybutadienole lässt sich bei moderaten Temperaturen von unter 80 °C durch Umsatz mit Isocyanaten bewirken. Die Materialeigenschaften des resultierenden Polyurethans, insbesondere dessen Glastemperatur und mechanische Eigenschaften, werden durch die Zahl der reaktiven Hydroxylgruppen pro Masseneinheit des Polybutadienols gesteuert.

Aufgabe der Erfindung ist es, Polyurethane, die bei Raumtemperatur glasartige Eigenschaften aufweisen, sowie zur Herstellung der glasartigen Polyurethane geeignete Polybutadienole bereitzustellen. Die mittels DSC bestimmte Glasübergangstemperatur des Polyurethans, hergestellt mit einem Isocyanat-Index von 100, soll mindestens 15 °C betragen. Aufgabe der Erfindung ist es insbesondere, hydroxylfunktionalisierte kurzkettige Polybutadien-Oligomeren zur Herstellung von glasartigen Polyurethanen mit sehr geringen Quellwerten in Wasser und langen Verarbeitungszeiten (offene Zeiten) zur Anwendungen beispielsweise als Beschichtungsmaterial, Reaktivklebstoff oder als Schaumstoff bereitzustellen. Weiterhin ist es Aufgabe der Erfindung, Polybutadienole bereitzustellen, die bereits bei Hydroxyläquivalentmassen von 750 g oder darunter glasartige Werkstoffe liefern. Die Mischungen von Polyol und Isocyanat sollen lange Verarbeitungszeiten ermöglichen und Polyurethane mit hydrophoben Eigenschaften liefern.

Gelöst wird die Aufgabe durch ein Verfahren zur Herstellung von Polybutadienolen mit einer Hydroxyläquivalentmasse von 250 bis 750 g aus Polybutadienen mit einem zahlenmittleren Molekulargewicht von 300 bis 2 000 g/mol enthaltend 20 bis 50% 1,4-Doppelbindungen und 50 bis 80% 1,2-vinylischen und 1,2-cyclovinylischen Doppelbindungen, bezogen auf die Menge aller Doppelbindungen, umfassend die Schritte
(i) Epoxidierung eines Teils oder aller 1,4-Doppelbindungen mit einem Epoxidierungsreagenz, das selektiv 1,4-Doppelbindungen epoxidiert,
(ii) Umsetzung des epoxidierten Polybutadiens mit einem Monoalkohol oder Wasser zu einem Polybutadienol.

Die Epoxidierung von terminalen 1,2-Vinylbindungen ist nur mit aromatischen Persäuren wie meta-Chloroperbenzoesäure (siehe Abdullin et. al. in Polymer Science Series B 2013, 55,349-354) sowie mit Übergangsmetallverbindungen möglich (siehe Wang et al. in J. Mol. Cat. A 2009, 309, 89-94). Für die erfindungsmäßigen Polybutadienole soll der Anteil an 1,4-Doppelbindungen nicht zu hoch sein, da dies zwar die Funktionalisierung begünstigt, aber hohe Umsätze in der Epoxidierung nötig werden, um glasartige Polyurethane zu erhalten. Ein hoher Anteil an 1,2-Doppelbindungen sorgt für die notwendige Steifigkeit. Glastemperaturen oberhalb von 15 °C setzen aber eine Vernetzung voraus, die einen bestimmten Anteil an 1,4-Doppelbindungen in der Polymerstruktur notwendig macht.

Epoxidierte Polybutadiene können durch geeignete Nucleophile, beispielsweise Wasser, wie in DE 10 2012 017055 beschrieben, Alkohole, wie in DE 35 11 513 oder EP-A-0 185 193 beschrieben, oder Amine, wie in DE 25 54 093 beschrieben, zu hydroxylfunktionalisierten Polybutadienen umgesetzt werden. Amine sind aber auf Grund ihrer katalytischen Wirkung in der nachfolgenden Reaktion der Polybutadienole mit Isocyanaten für die Epoxidringöffnung der Polybutadien-Epoxide (Schritt (ii)) ungeeignet.

Im Unterschied zu HTPB weisen die post-funktionalisierten Polybutadienpolyole die Hydroxylgruppen nicht selektiv an den Endgruppen auf, sondern statistisch über das Rückgrat des Polybutadiens verteilt. Verglichen mit terminalen Epoxiden ist die Öffnung der aus der Epoxidierung von 1,4-Doppelbindungen resultierenden disubstituierten Epoxidgruppen chemisch anspruchsvoll und bedarf vergleichsweise drastischer Bedingungen, wie Temperaturen von über 150°C und/oder hohe Drücke, oder sehr saure oder sehr basische Katalysatoren. Geeignete Katalysatoren für diese Reaktion sind starke Säuren wie Mineralsäuren, wie in EP 0 585 265 beschrieben, Bortrifluorid, wie in US 5,242,989 beschrieben, Trifluoressigsäure, wie in DE 25 54 093 beschrieben oder Trifluormethansulfonsäure, wie in WO 96/20234 und Li, J. Macromol. Sci, Part A, 2013, 50, 297-301 beschrieben, sowie Basen wie Kaliumhydroxyd, wie in DE 35 11 513 beschrieben.

Die Herstellung des Polybutadienpolyols besteht also aus zwei Reaktionsschritten, nämlich (i) einer Epoxidierung und (ii) einer Ringöffnung des Epoxidrings mit einem Monoalkohol oder Wasser.

Für die Herstellung der erfindungsmäßigen Polybutadienole werden unmodifizierte Polybutadiene mit einem zahlenmittleren Molekulargewicht von 300 bis 2000 g/mol, bevorzugt 500 bis 1500 g/mol verwendet. Die Mikrostruktur der Polybutadien-Oligomere weist 1,4-Doppelbindungen, 1,2-vinylischen und 1,2-cyclovinylischen Doppelbindungen auf. Die erfindungsmäß eingesetzten Polybutadiene enthalten dabei 20 bis 50%, bevorzugt 25 bis 40% 1,4-Doppelbindungen. Dementsprechend weisen die Polybutadiene 50 bis 80%, bevorzugt 60 bis 75% 1,2-vinylische und 1,2-cyclovinylische Doppelbindungen auf.

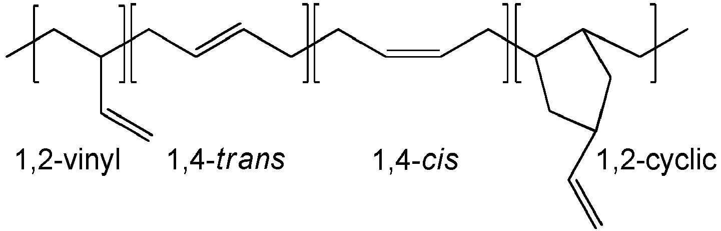

Die Polybutadien-Oligomere werden z.B. mit Ameisensäure und Wasserstoffperoxid epoxidiert. Die 1,4-Doppelbindungen des Oligomers werden teilweise oder vollständig umgesetzt zum Epoxid. Der Epoxidierungsgrad wird so gewählt, dass die benötigte Zahl der Hydroxylgruppen erzeugt werden kann.

Für die Öffnung der epoxidierten Polybutadienole werden Monoalkohole als Nucleophile eingesetzt. Die Monoalkohole können primäre oder sekundäre Monoalkohole sein, bevorzugt sind es primäre Monoalkohole. Bevorzugt sind primäre Monoalkohole wie Ethanol, 1-Propanol und 1-Butanol. Bevorzugt sind Monoalkohole, in denen das epoxidierte Polybutadien löslich ist, besonders bevorzugt ist 1-Propanol. Die Umsetzung kann auch in einem geeigneten Lösungsmittel, in dem das epoxidierte Polybutadienol, der Monoalkohol bzw. Wasser und der Katalysator löslich sind, durchgeführt werden.

In einer Ausführungsform der Erfindung erfolgt die Öffnung des Epoxidrings in Gegenwart von Trifluormethansulfonsäure als Katalysator. Weitere geeignete Katalysatoren sind starke Säuren, wie Schwefelsäure, Methansulfonsäure oder Lewissäuren, wie Zinn(II)-chlorid.

Die durch polymeranaloge Reaktionen erhaltenen Polybutadienole enthalten, abhängig von den Umsätzen der Epoxidierung und Epoxidöffnung, unterschiedliche Mengen an reaktiven Hydroxylgruppen. Die Hydroxyläquivalentmasse der erhaltenen Polybutadienole beträgt 250 bis 750 g, bevorzugt von 300 bis 600 g.

Die Öffnung von disubstituierten Epoxidgruppen mit Monoalkoholen liefert Polybutadienpolyole mit ausschließlich sekundären OH-Gruppen. Im Allgemeinen beträgt der Gehalt an sekundären OH-Gruppen, bezogen auf alle OH-Gruppen, in den erfindungsgemäß hergestellten Polybutadienolen mindestens 70 %, bevorzugt >90%, besonders bevorzugt mindestens 95 %. Um Reaktivsysteme zu erhalten, die lange Verarbeitungszeiten ermöglichen, sind sekundäre Hydroxylgruppen vorteilhaft, da die Reaktion mit Isocyanaten grundsätzlich langsamer als mit primären Hydroxylgruppen abläuft.

Die erfindungsgemäßen glasartigen Polyurethane können aus Polybutadienolen mit Hydroxyläquivalentmassen von 250 bis 750 g erhalten werden, die einen hohen Anteil an Wiederholungseinheiten mit 1,2-vinylischen und 1,2-cyclovinylischen Doppelbindungen enthalten. Die in der Mikrostruktur von der Polymerkette abstehenden, 1,2-vinylische und 1,2-cyclovinylische Doppelbindungen enthaltenden Gruppen erschweren die Molekülbewegung und erhöhen die Glasübergangstemperatur der Polybutadienole, sowie der daraus hergestellten vernetzten Polyurethane.

Gegenstand der vorliegenden Erfindung sind auch Polyurethane mit einer Glasübergangstemperatur von mindestens 15°C erhältlich durch Umsetzung von
a) Polyisocyanaten A mit
b) erfindungsgemäßen Polybutadienolen B,
c) gegebenenfalls weiteren Verbindungen C mit mindestens 2 gegenüber Isocyanaten reaktiven Wasserstoffatomen,
d) gegebenenfalls Katalysatoren D,
e) gegebenenfalls Wasser E,
f) gegebenenfalls physikalischen Treibmitteln F,
g) gegebenenfalls weiteren Hilfsmitteln und/oder Zusatzstoffen G.

Bevorzugt beträgt die Glasübergangstemperatur der Polyurethane mindestens 20 °C, besonders bevorzugt mindestens 25°C.

Die erfindungsgemäßen Polyurethane können nicht geschäumte, feste Materialien mit einer Dichte von im Allgemeinen größer als 1000 kg/m³ oder Schäume sein. Als Treibmittel zur Herstellung von Schäumen wird vorzugsweise Wasser (Komponente E) eingesetzt, das mit Isocyanatgruppen unter Abspaltung von Kohlendioxid reagiert. In Kombination mit oder an Stelle von Wasser können auch sogenannte physikalische Treibmittel eingesetzt werden. Dabei handelt es sich um gegenüber den Einsatzkomponenten inerte Verbindungen, die zumeist bei Raumtemperatur flüssig sind und unter den Bedingungen der Urethanreaktion verdampfen. Vorzugsweise liegt der Siedepunkt der physikalischen Treibmittel unter 100°C.

Zur Herstellung der erfindungsgemäßen Polyurethanreaktionsmischung werden die organischen Polyisocyanate A und die Komponenten, die Verbindungen mit gegenüber Isocyanaten reaktiven Wasserstoffatomen enthalten, in solchen Mengen zur Umsetzung gebracht, dass das Äquivalenzverhältnis von NCO-Gruppen zur Summe der reaktiven Wasserstoffatome 0,5 : 1 bis 4 : 1 (entsprechend einem Isocyanat Index von 50 bis 350), vorzugsweise 0,8 : 1 bis 2 : 1 und besonders bevorzugt von 0,9 : 1 bis 1,5 : 1 beträgt.

Die zur Herstellung der erfindungsgemäßen Polyurethane verwendeten organischen und/oder modifizierten Polyisocyanate A umfassen die aus dem Stand der Technik bekannten aliphatischen, cycloaliphatischen und aromatischen zwei- oder mehrwertigen Isocyanate sowie beliebige Mischungen daraus. Beispiele sind 4,4'-Methandiphenyldiisocyanat, 2,4'-Methandiphenyldiisocyanat, die Mischungen aus monomeren Methandiphenyldiisocyanaten und höherkernigen Homologen des Methandiphenyldiisocyanats (Polymer-MDI), Tetramethylendiisocyanat, Hexamethylendiisocyanat (HDI), die Mischungen aus Hexamethylendiisocyanaten und höherkernigen Homologen des Hexamethylendiisocyanats (Mehrkern-HDI), Isophorondiisocyanat (IPDI), 2,4- oder 2,6-Toluylendiisocyanat (TDI) oder Mischungen der genannten Isocyanate. Bevorzugt verwendet werden Toluylendiisocyanat (TDI), Diphenylmethandiisocyanat (MDI) und insbesondere Gemische aus Diphenylmethandiisocyanat und Polyphenylenpolymethylenpolyisocyanaten (Roh-MDI). Die Isocyanate können auch modifiziert sein, beispielsweise durch Einbau von Uretdion-, Carbamat-, Isocyanurat-, Carbodiimid-, Allophanat- und insbesondere Urethangruppen. Dabei kann die Isocyanatkomponente A auch in Form von Isocyanatgruppenhaltigen Isocyanatprepolymeren eingesetzt werden. Diese Polyisocyanatprepolymere sind erhältlich, indem vorstehend beschriebene Polyisocyanate als Komponente A1 beispielsweise bei Temperaturen von 30 bis 100°C, bevorzugt bei etwa 80°C, mit Polyolen A2 zum Prepolymer umgesetzt werden.

Vorzugsweise wird zur Herstellung der Prepolymere 4,4'-MDI mit uretoniminmodifiziertem MDI und handelsüblichen Polyolen auf Basis von Polyestern, beispielsweise ausgehend von Adipinsäure oder Polyethern, beispielsweise ausgehend von Ethylenoxid und/oder Propylenoxid, umgesetzt.

Polyole A2 sind dem Fachmann bekannt und beispielsweise beschrieben im "Kunststoffhandbuch, Band 7, Polyurethane", Carl Hanser Verlag, 3. Auflage 1993, Kapitel 3.1. Vorzugsweise werden dabei als Polyole A2 Polyetherole eingesetzt. Gegebenenfalls werden den genannten Polyolen A2 bei der Herstellung der Isocyanatprepolymere übliche Kettenverlängerer oder Vernetzungsmittel als Komponente A3 zugegeben. Solche Kettenverlängerer sind die im Folgenden unter B2 beschriebenen Stoffe. Besonders bevorzugt werden als Kettenverlängerer 1,4-Butandiol, 1,2-Propylenglykol, 1,3-Butandiol, Dipropylenglykol, Tripropylenglykol und/oder Propylenglykole mit einem Molekulargewicht bis zu 500 eingesetzt. Vorzugsweise wird dabei das Verhältnis von organischen Polyisocyanaten A1 zu Polyolen A2 und Kettenverlängerern A3 so gewählt, dass das Isocyanatprepolymer einen NCO-Gehalt von 10 bis 28 %, besonders bevorzugt von 14 bis 25 % aufweist.

Als Polyole A2 können auch die Polybutadienole B sowie die nachstehend genannten weiteren Verbindungen C eingesetzt werden.

In einer Ausführungsform der vorliegenden Erfindung handelt es sich bei den glasartigen Polyurethanen um nicht geschäumte Polyurethane. Diese sind erhältlich durch Umsetzung der Komponenten A, B, gegebenenfalls C, gegebenenfalls D und gegebenenfalls G in den oben angegebenen Mengen, wobei in Abwesenheit von Treibmitteln E und F gearbeitet wird.

In einer weiteren Ausführungsform der vorliegenden Erfindung handelt es sich bei den glasartigen Polyurethanen um Schäume. Diese sind erhältlich durch Umsetzung der Komponenten A, B, gegebenenfalls C, gegebenenfalls D und gegebenenfalls G, wobei in Anwesenheit von Wasser E als Treibmittel und/oder eines physikalischen Treibmittels F gearbeitet wird. Im Allgemeinen wird in Gegenwart von 0,1 bis 30 Gew.-Teilen, bevorzugt 0,2 bis 15 Gew.-Teile des physikalischen Treibmittels und/oder in Gegenwart von 0,05 bis 3,0 Gew.-Teilen Wasser, bevorzugt 0,1 bis 1,0 Gew.-Teilen Wasser gearbeitet.

Geeignete weitere Verbindungen C mit mindestens zwei gegenüber Isocyanaten reaktiven Wasserstoffatomen weisen ein Molekulargewicht von im Allgemeinen mindestens 58 g/mol auf. Dabei können alle zur Polyurethanherstellung bekannten Verbindungen mit mindestens zwei reaktiven Wasserstoffatomen und einem Molekulargewicht von mindestens 58 g/mol eingesetzt werden. Diese weisen beispielsweise eine Funktionalität von 2 bis 8 und ein Molekulargewicht von 58 bis 12 000 g/mol auf. So können beispielsweise Polyetherpolyamine und/oder Polyole, ausgewählt aus der Gruppe der Kettenverlängerer, Polyetherpolyole, Polyesterpolyole oder Mischungen daraus, verwendet werden.

Die bevorzugt zur Anwendung kommenden weiteren Polyole C sind Kettenverlängerer, Polyetherole, Polycarbonatpolyole und/oder Polyesterole mit Molekulargewichten von 58 bis 12000 g/mol.

Als Kettenverlängerer werden vorzugsweise Verbindungen mit einem Molekulargewicht von kleiner als 300 g/mol eingesetzt, beispielsweise Verbindungen mit 2 gegenüber Isocyanaten reaktiven Wasserstoffatomen. Diese können einzeln oder aber auch in Form von Mischungen eingesetzt werden. In Betracht kommen beispielsweise aliphatische, cycloaliphatische und/oder araliphatische Diole mit 2 bis 14, vorzugsweise 2 bis 10 Kohlenstoffatomen, insbesondere Alkylenglykole. Geeignet sind somit auch niedermolekulare hydroxylgruppenhaltige Polyalkylenoxide auf Basis Ethylen- und/oder 1,2-Propylenoxid. Bevorzugte Kettenverlängerer sind (Mo no-)Ethylenglykol, 1,2-Propandiol, 1,3-Propandiol, Pentandiol, Tripropylenglykol, 1,10-Decandiol, 1,2-, 1,3-, 1,4-Dihydroxycyclohexan, Diethylenglykol, Triethylenglykol, Dipropylenglykol, 1,4-Butandiol, 1,6-Hexandiol, 2-Methylpropan-1,3-diol, 2,2-Dimethylpropan-1,3-diol, Bisphenol-A-bis(hydroxyether), N-Phenyldiethanolamin und Bis-(2-hydroxyethyl)-hydrochinon. Besonders bevorzugt werden als Kettenverlängerer Monoethylenglykol, Diethylenglykol, 2-Methyl-1,3-Propandiol, 1,4-Butandiol, 1,5-Pentandiol, 1,6-Hexandiol oder Mischungen davon eingesetzt, ganz besonders bevorzugt sind 1,4-Butandiol oder Monoethylenglykol.

Die Polyetherole, Polycarbonatpolyole und/oder Polyesterole weisen bevorzugt Molekulargewichte von 150 bis 12000 g/mol und eine mittlere Funktionalität von 2 bis 8 auf. Vorzugsweise werden als weitere Polyole C ausschließlich Polyetherole und/oder Polyesterpolyole eingesetzt.

Bei Polyetherolen und Polyesterpolyolen unterscheidet man zwischen Polyolen, die für Hartschaum einerseits und für Elastomere oder Weichschaum andererseits, eingesetzt werden. Polyole für Hartschaum-typische Anwendungen haben eine Funktionalität von 2 bis 8 und ein Molekulargewicht von 150 bis 2000. Polyole für Elastomer- und Weichschaum-typische Anwendungen haben eine Funktionalität von 2 bis 3 und ein Molekulargewicht von 2000 bis 6000. Polyol C ist bevorzugt ein Kettenverlänger oder ein Polyol mit einer Funktionalität von 2 bis 8 und einem Molekulargewicht von 150 bis 2000.

Die Polyetherole C werden nach bekannten Verfahren hergestellt. Beispielsweise können sie durch anionische Polymerisation von Alkylenoxiden mit 2 bis 4 C-Atomen mit Alkalihydroxiden, wie z.B. Natrium- oder Kaliumhydroxid oder Alkalialkoholaten, wie z.B. Natriummethylat, Natrium- oder Kaliumethylat oder Kaliumisopropylat als Katalysatoren und unter Zusatz mindestens eines Startermoleküls, das 2 bis 8, vorzugsweise 2 bis 6 reaktive Wasserstoffatome aufweist, oder durch kationische Polymerisation mit Lewis-Säuren, wie Antimonpentachlorid, Borfluorid-Etherat u. a., oder Bleicherde als Katalysatoren, hergestellt werden. Ebenso können Polyetherpolyole durch Doppelmetallcyanidkatalyse aus einem oder mehreren Alkylenoxiden mit 2 bis 4 Kohlenstoffatomen hergestellt werden. Auch tertiäre Amine können als Katalysator eingesetzt werden, beispielsweise Triethylamin, Tributylamin, Trimethylamin, Dimethylethanolamin, Imidazol oder Dimethylcyclohexylamin. Für spezielle Einsatzzwecke können auch monofunktionelle Starter in den Polyetheraufbau eingebunden werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden.

Als Startermoleküle kommen beispielsweise in Betracht: Wasser, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamin, 2,3-, 2,4- und 2,6-Toluylendiamin (TDA) und 4,4'-, 2,4'- und 2,2'-Diaminodiphenylmethan (MDA) und polymeres MDA. Als Startermoleküle kommen ferner in Betracht: Alkanolamine, wie z.B. Ethanolamin, N-Methyl- und N-Ethylethanolamin, Dialkanolamine, wie z.B. Diethanolamin, N-Methyl- und N-Ethyldiethanolamin, Trialkanolamine, wie z.B. Triethanolamin, und Ammoniak. Vorzugsweise verwendet werden mehrwertige Alkohole, wie Ethandiol, 1,2- und 2,3-Propandiol, Diethylenglykol, Dipropylenglykol, 1,4-Butandiol, 1,6-Hexandiol, Glycerin, Trimethylolpropan, Pentaerythrit, Sorbitol und Saccharose, und Mischungen davon. Die Polyetherpolyole können einzeln oder in Form von Mischungen verwendet werden.

Als weitere Polyesterole C können in der Polyurethanchemie üblicherweise verwendete Polyesterole eingesetzt werden. Polyesterole C können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen, hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei oder mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol. In einer besonderen Ausführungsform wird als Alkohol-Komponente Polyol B eingesetzt. Eingesetzt werden können ferner Polyesterpolyole aus Lactonen, z.B. Caprolacton, oder Hydroxycarbonsäuren, z.B. Hydroxycapronsäure. Weiter können eingesetzt werden Polyesterole aus Caprolacton und/oder Hydroxycarbonsäuren und Polyol B.

Zur Herstellung der Polyesterpolyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a. in der Schmelze bei Temperaturen von 150 bis 250 °C, vorzugsweise 180 bis 220 °C, gegebenenfalls unter vermindertem Druck, bis zu der gewünschten Säurezahl, die vorzugsweise kleiner als 10, besonders bevorzugt kleiner als 2 ist, polykondensiert werden. Nach einer bevorzugten Ausführungsform wird als Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol zur azeotropen Abdestillation des Kondensationswassers durchgeführt werden. Zur Herstellung der Polyesterpolyole werden die organischen Polycarbonsäuren und/oder -derivate und mehrwertigen Alkohole vorteilhafterweise im Molverhältnis von 1 : 1 bis 2, vorzugsweise 1 : 1,05 bis 1,5 polykondensiert.

Die erhaltenen Polyesterpolyole besitzen vorzugsweise eine Funktionalität von 2 bis 4, insbesondere von 2 bis 3, und ein zahlenmittleres Molekulargewicht von 200 bis 3000, vorzugsweise 300 bis 2000 g/mol.

Als Komponente C besonders geeignete Polyole sind Polyole auf Basis von Ölen und Fetten, wie Rizinusöl und weiteren hydroxylmodifizierten Ölen, die beispielsweise unter dem Handelsnahmen Sovermol® von BASF SE, Ludwigshafen, DE erhältlich sind.

Als Katalysatoren D zur Herstellung der Polyurethane werden bevorzugt Verbindungen verwendet, welche die Reaktion der Hydroxylgruppen enthaltenden Verbindungen der Komponente B und gegebenenfalls C mit den organischen, gegebenenfalls modifizierten Polyisocyanaten A stark beschleunigen. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethylbutandiamin, N,N,N',N'-Tetramethylhexandiamin, Pentamethyldiethylentriamin, Tetramethyldiaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diazabicyclo-(2,2,2)-octan und Alkanolaminverbindungen, wie Triethanolamin, Triisopropanolamin, N-Methyl- und N-Ethyldiethanolamin und Dimethylethanolamin. Ebenso kommen in Betracht organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutylzinndiacetat, Dibutylzinndilaurat, Dibutylzinnmaleat und Dioctylzinndiacetat, sowie Bismutcarboxylate, wie Bismut(III)-neodecanoat, Bismut-2-ethylhexanoat und Bismutoctanoat oder Mischungen davon. Die organischen Metallverbindungen können allein oder vorzugsweise in Kombination mit stark basischen Aminen eingesetzt werden. Handelt es sich bei der Komponente C um einen Ester, werden vorzugsweise ausschließlich Aminkatalysatoren eingesetzt.

Vorzugsweise verwendet werden 0,001 bis 5 Gew.-%, insbesondere 0,05 bis 2 Gew.-% Katalysator bzw. Katalysatorkombination, bezogen auf das Gesamtgewicht der Komponenten B und gegebenenfalls C.

Die erfindungsgemäßen glasartigen Polyurethane mit einer Glasübergangstemperatur von mindestens 15 °C können nicht geschäumte, feste Materialien mit einer Dichte von im Allgemeinen größer als 1000 kg/m³ oder Schäume sein. Als Treibmittel zur Herstellung von Schäumen wird vorzugsweise Wasser (Komponente E) eingesetzt, das mit Isocyanatgruppen unter Abspaltung von Kohlendioxid reagiert. In Kombination mit oder an Stelle von Wasser können auch sogenannte physikalische Treibmittel eingesetzt werden. Dabei handelt es sich um gegenüber den Einsatzkomponenten inerte Verbindungen, die zumeist bei Raumtemperatur flüssig sind und unter den Bedingungen der Urethanreaktion verdampfen. Vorzugsweise liegt der Siedepunkt unter 100°C.

Die physikalischen Treibmittel F werden zumeist ausgewählt aus der Gruppe bestehend aus Alkanen und/oder Cycloalkanen mit mindestens 4 Kohlenstoffatome, Dialkylethern, Estern, Alkoholen, Ketonen, Acetalen, Fluoralkanen mit 1 bis 8 Kohlenstoffatomen und Tetraalkylsilanen. Als Beispiele seien genannt: Propan, n-Butan, iso- und Cyclobutan , n-, iso- und Cyclopentan, Cyclohexan, Dimethylether, Methylethylether, Methylbutylether, Ameisensäuremethylester, Tertiarbutanol, Aceton sowie Fluoralkane, die in der Troposphäre abgebaut werden können und deshalb für die Ozonschicht unschädlich sind, wie Trifluormethan, Difluormethan, 1,1,1,3,3-Pentafluorbutan, 1,1,1,3,3-Pentafluorpropan, 1,1,1,2,3-Pentafluorpropen, 1-Chlor-3,3,3-trifluorpropen, 1,1,1,2-Tetrafluorethan, Difluorethan und 1,1,1,2,3,3,3-Heptafluorpropan sowie Perfluoralkane, wie, C₃F₈, C₄F₁₀, C₅F₁₂, C₆F₁₄, und C₇F₁₇. Besonders bevorzugt sind Kohlenwasserstoffe, vorzugsweise Pentane, insbesondere Cyclopentan. Die genannten physikalischen Treibmittel können allein oder in beliebigen Kombinationen untereinander eingesetzt werden.

Wenn Wasser als einziges Treibmittel eingesetzt wird, dann beträgt die Menge an Wasser bevorzugt 0,05 bis 3 Gew.-Teile, bezogen auf die Polyolkomponenten B und gegebenenfalls C. Wird ein physikalisches Treibmittel eingesetzt, so beträgt dessen Menge bevorzugt 0,1 bis 30 Gew.-Teile, bezogen auf die Polyolkomponenten B und gegebenenfalls C.

Die Schäume werden in der Regel in einer Form hergestellt. Die Dichte der Schäume beträgt im Allgemeinen 100 bis 1000 kg/m³. Solche Schäume werden manchmal in der Fachliteratur als mikrozelluläre Schaumstoffe bezeichnet.

Der Reaktionsmischung zur Herstellung der Polyurethanschäume können gegebenenfalls auch noch Hilfsmittel und/oder Zusatzstoffe E zugegeben werden. Genannt seien als Hilfsmittel und/oder Zusatzstoffe E beispielsweise oberflächenaktive Substanzen, Schaumstabilisatoren, Zellregler, weitere Trennmittel, Füllstoffe, Farbstoffe, Pigmente, Hydrolyseschutzmittel, flammhemmende Mittel, geruchsabsorbierende Substanzen und fungistatische und/oder bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren, sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure, und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl, und Zellregler, wie Paraffine, Fettalkohole, Polyoxyalkylen-Polysiloxancopolymere und Dimethylpolysiloxane. Zur Verbesserung der Emulgierwirkung, der Zellstruktur und/oder Stabilisierung des Schaumes eignen sich ferner oligomere Acrylate mit Polyoxyalkylen- und Fluoralkanresten als Seitengruppen.

Die oberflächenaktiven Substanzen werden üblicherweise in Mengen von 0,01 bis 5 Gew.-Teilen, bezogen auf 100 Gew.-Teile der Komponente B und gegebenenfalls C, eingesetzt.

Als Füllstoffe, insbesondere verstärkend wirkende Füllstoffe, sind die an sich bekannten, üblichen organischen und anorganischen Füllstoffe, Verstärkungsmittel, Beschwerungsmittel, Beschichtungsmittel geeignet. Im einzelnen seien beispielhaft genannt: anorganische Füllstoffe, wie silikatische Mineralien, beispielsweise Schichtsilikate, wie Antigorit, Bentonit, Serpentin, Hornblenden, Amphibole, Chrisotil und Talkum, Metalloxide, wie Kaolin, Aluminiumoxide, Titanoxide, Zinkoxid und Eisenoxide, Metallsalze wie Kreide und Schwerspat, und anorganische Pigmente, wie Cadmiumsulfid, Zinksulfid sowie Glas u.a. Vorzugsweise verwendet werden Kaolin (China Clay), Aluminiumsilikat und Copräzipitate aus Bariumsulfat und Aluminiumsilikat. Auch können anorganische Fasern zugesetzt werde, zum Beispiel Glasfasern. Als organische Füllstoffe kommen beispielsweise in Betracht: Russ, Melamin, Kollophonium, Cyclopentadienylharze und Pfropfpolymerisate sowie Cellulosefasern, Polyamid-, Polyacryl nitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten A bis D, zugegeben.

Die Erfindung wird durch die nachstehenden Beispiele näher erläutert.

### Beispiele

Es wurde ein unfunktionalisiertes Polybutadien eingesetzt, dass unter dem Handelsnamen
Lithene® Ultra AL von der Firma Synthomer Ltd. vertrieben wird. Es weist eine zahlenmittlere Molmasse von 750 g/mol auf und setzt sich, bezogen auf die Menge aller Doppelbindungen, aus ca. 38 mol.-% 1,4-cis/trans, ca. 36 mol.-% 1,2-vinylischen und ca. 26 mol.-% 1,2-cyclovinylischen Einheiten zusammen.

Die Umsätze der Doppelbindungen bei der Epoxidierung von Polybutadienen wurden per ¹H-NMR-Spektroskopie in *d*-Chloroform bestimmt.

Die Epoxidgehalte der modifizierten Polybutadiene wurden nach einer Methode von Jung und Kleeberg bestimmt, wie beschrieben in Fres. J. Anal. Chem. 1962, 387. Die OH-Zahlen der Polyole wurden nach DIN 53240-2 mittels potentiometrischer Titration bestimmt.

Die dynamischen Scherviskositäten wurden mit einem Rheometer AR-G2 der Fa. TA Instruments bestimmt. Die Messungen erfolgten bei der angegebenen Temperatur im Steady State-Modus bei Scherfrequenzen zwischen 0,1 und 100 Hz mit einer Kegel-Platte-Geometrie (Durchmesser: 40 mm, Winkel: 2°).

Die Glastemperaturen wurden mittels DSC bestimmt. Unvernetzte Materialien wurden von Raumtemperatur mit einer Geschwindigkeit von 10 °C/min auf -100°C gekühlt. Die Temperatur wurde 4 min lang gehalten. Schließlich wurde die Temperatur mit einer Geschwindigkeit von 10°C/min auf 100°C erhöht und die Glastemperatur in dieser Heizphase im Wendepunkt der Wärmestromkurve bestimmt. Die vernetzten Materialien wurden innerhalb von 12 Minuten zunächst auf 100°C erwärmt und anschließend innerhalb von 22 Minuten auf -90°C gekühlt. In der zweiten Heizphase wurde die Temperatur mit 20°C/min auf 255°C erhöht. Die Glastemperatur wurde in der zweiten Heizphase im Wendepunkt der Wärmestromkurve bestimmt.

Die Zugversuche erfolgten nach DIN 53504 an S2-Schulterstäben mit optischer Wegverfolgung. Shore-Härten wurden nach DIN 53505 bestimmt.

Die Bestimmung der Wasseraufnahme erfolgte an passgenau für Diarahmen zugeschnitten PU-Platten von ca. 3 x 4 cm². Die Proben wurden fünf Stunden lang in Wasser mit einer Temperatur von 100 °C gestellt. Die Proben wurden schließlich trockengetupft, und aus der Massendifferenz wurde der Quellgrad berechnet.

### Beispiel 1: Herstellung von teilepoxidierten Polybutadien-Oligomeren

In einem konischen 10 L-Stahlreaktor wurden 1000 g Lithene® Ultra AL in 5667 g Toluol gelöst und auf 60°C geheizt. Nach Zugabe von 43,8 g 98%iger Ameisensäure wurde mit 300 rpm innig gemischt. Über 7,5 Stunden wurden kontinuierlich 70, 100 oder 130 mL/Stunde Wasserstoffperoxid zugegeben. Anschließend wurde das Reaktionsgemisch zweimal mit gesättigter Natriumhydrogencarbonat-Lösung und einmal mit gesättigter Natriumchlorid-Lösung gewaschen. Die organische Phase wurde mit Natriumsulfat getrocknet und das Lösungsmittel unter reduziertem Druck bei 60°C entfernt. Die Eigenschaften der erhaltenen hellgelben, viskosen Öle sind in Tabelle 1 zusammengefasst.

**Tabelle 1: teilepoxidierte Polybutadiene**

| Bezeichnung | EPB 1 | EPB 2 | EPB 3 |
|---|---|---|---|
| Dosiergeschwindigkeit H₂O₂ [mL/h] | 70 | 100 | 130 |
| Ausbeute [g] | 966,1 | 1011,1 | 1015,3 |
| Epoxidanteil [%]¹ | 20,0 | 24,2 | 27,3 |
| Epoxidanteil [mol/100g] | 0,225 | 0,261 | 0,291 |
| Tg[°C] | -40,0 | -37,9 | -35,5 |
| n @ 40 °C [Pa·s] | 4,66 | 6,00 | 7,47 |

| | | | |
|---|---|---|---|
| ¹) bezogen auf alle Doppelbindungen des Edukts | | | |

### Beispiel 2: Herstellung von Polybutadienpolyolen

In einem 6 L-Glasreaktor wurden 900 g für die Herstellung der Polyole 1 und 2 bzw. 450 g für die Herstellung von Polyol 3 der teilepoxidierten Lithene® Ultra AL in 1800 g 1-Propanol bei der angegebenen Temperatur erwärmt und gelöst. Nach Zugabe einer entsprechenden Menge einer 10%igen Lösung von Trifluormethansulfonsäure (TfOH) in 1-Propanol wurde die angegebene Zeit lang gerührt. Anschließend wurde die Mischung mit Natriumhydrogencarbonat neutralisiert, und unlösliches Salz wurde nach dem Abkühlen der Mischung abfiltriert. Von dem Filtrat wurde unter reduziertem Druck bei bis zu 95°C überschüssiges 1-Propanol entfernt. Die Eigenschaften der erhaltenen hellgelben, viskosen Öle sind in Tabelle 2 zusammengefasst.

**Tabelle 2: hydroxylmodifizierte Polybutadienole**

| Bezeichnung | Polyol 1 | Polyol 2 | Polyol 3 |
|---|---|---|---|
| Epoxidiertes PB | EPB 1 | EPB 2 | EPB 3 |
| Temperatur [°C] | 70 | 70 | 70 |
| Reaktionszeit [h] | 8 | 6 | 8 |
| TfOH [ppm] | 80 | 100 | 100 |
| Epoxidrest [mol/100g] | 0,005 | 0,007 | 0,012 |
| OH-Zahl [mg KOH/g] | 107,7 | 115,8 | 138,9 |
| Äquivalentmasse | 521 | 484 | 404 |
| Tg [°C] | -22,6 | -16,8 | -12,1 |
| η[Pa·s] bei 40 °C | 34,3 | 61,6 | 126,1 |

### Beispiel 3: Herstellung eines glasartigen Polyurethans

Für die Verarbeitung zum Polyurethan wurden die Polybutadienpolyole aus Tabelle 2 und polymeres MDI (Lupranat® M20 von BASF SE, Ludwigshafen, DE) mit einem NCO-Wert von 31,5% auf 60°C temperiert. Die Polyol-Komponente enthielt neben dem Polybutadienpolyol optional ein Quecksilbersalz als Katalysator. Die Mischung der Komponenten erfolgte in einem Speedmixer der Fa. Hausschild GmbH für eine Minute bei 2000 rpm.

Für die Herstellung von PUR 2 wurden in einem Becher für die A-Komponente 62,74 g Polybutadienol 2 mit 0,07 g Katalysator eingewogen und im Speedmixer blasenfrei gemischt. Anschließend wurde die A-Komponente für mindestens 30 Minuten bei 60°C (Verarbeitungstemperatur) gelagert, ehe die Isocyanat-Komponente B zugegeben wurde. B-Komponente und A-Komponente wurden vermischt. Das Gemisch wurde in eine auf 70°C temperierte Aluminiumform von ca. 150 x 200 x 2 mm³ gegossen und mit einem Kunststoffstab glatt gestrichen. 20 Minuten nach dem Abbinden (offene Zeit; Verarbeitungszeit bei 70°C) wurde das Material entformt und für 4 Stunden bei 80°C getempert. Das transparente glänzende Polyurethan wurde vor der Charakterisierung mindestens 7 Tage bei 23°C und 50% Luftfeuchtigkeit gelagert.

In Tabelle 3 sind die Eigenschaften weiterer Polyurethane aus Polybutadienolen zusammengefasst.

**Tabelle 3: glasartige PUR-Materialien**

| Bezeichnung | PUR 1 | PUR 2 | PUR 3 |
|---|---|---|---|
| Polyol-Name | Polyol 1 | Polyol 2 | Polyol 3 |
| Index | 100 | 100 | 100 |
| Katalysator | 0,1 | 0,1 | 0,1 |
| Offene Zeit bei 70 °C [min] | 4,1 | 3,6 | 2,8 |
| Tg [°C] E-Modul [MPa] | 32,0 622 | 44,9 1090 | 59,1 1800 |
| Zugfestigkeit [MPa] | 19,9 | 32,2 | 44,8 |
| Reißdehnung [%] | 30,7 | 4,6 | 5,8 |
| Shore D | 71 | 79 | 81 |
| Quellgrad [%] | 0,59 | 0,50 | 0,43 |

### Vergleichsbeispiel 1

Ein weiteres unfunktionalisiertes Polybutadien, das unter dem Handelsnamen Lithene® Ultra PM4 von der Firma Synthomer vertrieben wird, wurde umgesetzt. Es weist im Vergleich zum beschriebenen Lithene® Ultra AL eine zahlenmittlere Molmasse von 2000 g/mol und einen 1,2-vinylischen und 1,2-cyclovinylischen Anteil von zusammen 21%, bezogen auf die Menge aller Doppelbindungen, auf. Weiterhin wurde ein Polybutadien Lithene® Ultra AL verwendet. Die Epoxidierung von Lithene® Ultra PM4 und Lithene® Ultra AL erfolgte entsprechend dem Beispiel 1 und lieferte teilepoxidierte Polybutadien-Oligomere mit den in Tabelle 4 zusammengefassten Eigenschaften.

**Tabelle 4: Teilepoxidierte Polybutadiene**

| Bezeichnung | EPB 4 | EPB 5 |
|---|---|---|
| Polybutadien-Typ | Lithene® Ultra AL | Lithene® ultraPM4 |
| Dosiergeschwindigkeit H₂O₂ [mL/h] | 30 | 50 |
| Epoxidanteil [%]¹ | 9,3 | 14,9 |
| Epoxidanteil [mol/100g] | 0,125 | 0,225 |
| Tg [°C] | -48,2 | -76,1 |
| η bei 40 °C [Pa·s] | 2,24 | 0,986 |

| | | |
|---|---|---|
| ¹) bezogen auf alle Doppelbindungen des Edukts | | |

### Vergleichsbeispiel 2

Die Öffnung der Epoxide der teilepoxidierten Polybutadiene aus Tabelle 4 mit 1-Propanol, entsprechend Beispiel 2, lieferte Polybutadienole mit den in Tabelle 5 zusammengefassten Eigenschaften.

**Tabelle 5: Hydroxyl-modifizierte Polybutadienole**

| Bezeichnung | Polyol 4 | Polyol 5 |
|---|---|---|
| Epoxidiertes PB | EPB 4 | EPB 5 |
| Temperatur [°C] | 80 | 70 |
| Reaktionszeit [h] | 6 | 6 |
| TfOH [ppm] | 80 | 100 |
| Epoxidrest [mol/100g] | 0,005 | 0,012 |
| OH-Zahl [mg KOH/g] | 60,0 | 112,0 |
| Äquivalentmasse | 936 | 501 |
| Tg [°C] | -40,0 | -65,9 |
| η[Pa·s] bei 40 °C | 5,33 | 3,68 |

### Vergleichsbeispiel 3

Die Vernetzung der Polybutadienpolyole aus Tabelle 5 mit Isocyanaten, entsprechend dem Beispiel 3, lieferte Materialien mit den in Tabelle 6 zusammengefassten Eigenschaften.

**Tabelle 6: PUR-Materialien**

| Bezeichnung | PUR 4 | PUR 5 |
|---|---|---|
| Polyol-Name | Polyol 4 | Polyol 5 |
| Index | 100 | 100 |
| Katalysator | 0,1 | 0,1 |
| Offene Zeit bei 70 °C [min] | 4,6 | 9,2 |
| Tg [°C] E-Modul [MPa] | -13,5 0,92 | -22,1 6,78 |
| Zugfestigkeit [MPa] | 1,42 | 6,4 |
| Reißdehnung [%] | 95 | 76 |
| Shore D | <10 | 20 |
| Quellgrad [%] | 0,50 | 0,54 |

Die Beispiele und Vergleichsbeispiele zeigen, dass die Polybutadienole bereits mit hohen Hydroxyläquivalentmassen zu vernetzten Polyurethanen mit Glastemperaturen oberhalb von 25°C umgesetzt werden können. Die Materialien weisen durch die hydrophobe Eigenschaft des Polybutadiens sehr geringe Quellgrade in Wasser auf. Zudem enthalten die Polymere keine hydrolyseempfindlichen Reaktionsstellen. Durch den Verzicht auf einen Katalysator lassen sich Rezepturen mit wesentlich längeren Verarbeitungszeiten erzeugen, bevor es zu einer Vernetzung des Materials kommt. Durch Zugabe eines Katalysators kann die Verarbeitungszeit beliebig verkürzt werden, wobei die Materialeigenschaften der erhaltenen Polyurethane im Wesentlichen unverändert bleiben.

## Patentansprüche

1. Verfahren zur Herstellung von Polybutadienolen mit einer Hydroxyläquivalentmasse von 250 bis 750 g aus Polybutadienen mit einem zahlenmittleren Molekulargewicht von 300 bis 2000 g/mol enthaltend 20 bis 50% 1,4-Doppelbindungen und 50 bis 80% 1,2-vinylischen und 1,2-cyclovinylischen Doppelbindungen, bezogen auf die Menge aller Doppelbindungen, umfassend die Schritte
i) Epoxidierung eines Teils oder aller 1,4-Doppelbindungen mit einem Epoxidierungsreagenz, das selektiv 1,4-Doppelbindungen epoxidiert,
ii) Umsetzung des epoxidierten Polybutadiens mit einem Monoalkohol oder Wasser zu einem Polybutadienol.

2. Verfahren nach Anspruch 1, **dadurch gekennzeichnet, dass** das Epoxidierungsreagenz Perameisensäure ist.

3. Verfahren nach Anspruch 1 oder 2, **dadurch gekennzeichnet, dass** der Monoalkohol ein primärer Alkohol ist.

4. Verfahren nach Anspruch 3, **dadurch gekennzeichnet, dass** der Monoalkohol ausgewählt ist aus der Gruppe bestehend aus Ethanol, 1-Propanol und 1-Butanol.

5. Polybutadienole, erhältlich nach dem Verfahren gemäß einem der Ansprüche 1 bis 4.

6. Polybutadienole nach Anspruch 5, **dadurch gekennzeichnet, dass** sie > 90% sekundäre OH-Gruppen, bezogen auf die Menge aller OH-Gruppen, enthalten.

7. Polyurethane mit einer Glasübergangstemperatur von mindestens 15°C, erhältlich durch Umsetzung von
a) Polyisocyanaten A mit
b) Polybutadienolen B gemäß Anspruch 5 oder 6,
c) gegebenenfalls weiteren Verbindungen C mit mindestens 2 gegenüber Isocyanaten reaktiven Wasserstoffatomen,
d) gegebenenfalls Katalysatoren D,
e) gegebenenfalls Wasser E,
f) gegebenenfalls physikalischen Treibmitteln F,
g) gegebenenfalls weiteren Hilfsmitteln und/oder Zusatzstoffen G.

8. Verwendung von Polybutadienolen gemäß Anspruch 5 oder 6 zur Herstellung von Polyurethanen mit einer Glasübergangstemperatur von mindestens 15°C.

## Claims

1. A process for the production of polybutadienols having a hydroxy equivalent mass from 250 to 750 g, from polybutadienes with number-average molar mass from 300 to 2000 g/mol comprising from 20 to 50% of 1,4 double bonds and from 50 to 80% of 1,2 vinylic and 1,2 cyclovinylic double bonds, based on the quantity of all of the double bonds, comprising the steps of
i) epoxidation of some or all of the 1,4 double bonds with an epoxidizing reagent which selectively epoxidizes 1,4 double bonds,
ii) reaction of the epoxidized polybutadiene with an alcohol or water to give a polybutadienol.

2. The process according to claim 1, wherein the epoxidizing reagent is performic acid.

3. The process according to claim 1 or 2, wherein the monoalcohol is a primary alcohol.

4. The process according to claim 3, wherein the monoalcohol is selected from the group consisting of ethanol, 1-propanol, and 1-butanol.

5. A polybutadienol obtainable by the process according to any of claims 1 to 4.

6. The polybutadienol according to claim 5, which comprises > 90% of secondary OH groups, based on the quantity of all of the OH groups.

7. A polyurethane with glass transition temperature at least 15°C, obtainable via reaction of
a) polyisocyanates A with
b) polybutadienols B according to claim 5 or 6,
c) optionally other compounds C having at least 2 hydrogen atoms reactive toward isocyanates,
d) optionally catalysts D,
e) optionally water E,
f) optionally physical blowing agents F,
g) optionally other auxiliaries and/or additives G.

8. The use of polybutadienols according to claim 5 or 6 for the production of polyurethanes with glass transition temperature at least 15°C.

## Revendications

1. Procédé pour la préparation de polybutadiénols présentant une masse équivalente d'hydroxyle de 250 à 750 g à partir de polybutadiènes présentant un poids moléculaire moyen en nombre de 300 à 2000 g/mole, contenant 20 à 50% de doubles liaisons 1,4 et 50 à 80% de doubles liaisons vinyliques 1,2 et cyclovinyliques 1,2, par rapport à la quantité de toutes les doubles liaisons, comprenant les étapes de
i) époxydation d'une partie ou de toutes les doubles liaisons 1,4 par un réactif d'époxydation qui époxyde sélectivement les doubles liaisons 1,4,
ii) transformation du polybutadiène époxydé avec un monoalcool ou de l'eau en un polybutadiénol.

2. Procédé selon la revendication 1, **caractérisé en ce que** le réactif d'époxydation est l'acide performique.

3. Procédé selon la revendication 1 ou 2, **caractérisé en ce que** le monoalcool est un alcool primaire.

4. Procédé selon la revendication 3, **caractérisé en ce que** le monoalcool est choisi dans le groupe constitué par l'éthanol, le 1-propanol et le 1-butanol.

5. Polybutadiénols pouvant être obtenus selon le procédé selon l'une quelconque des revendications 1 à 4.

6. Polybutadiénols selon la revendication 5, **caractérisés en ce qu'**ils contiennent > 90% de groupes OH secondaire, par rapport à la quantité de tous les groupes OH.

7. Polyuréthanes présentant une température de transition vitreuse d'au moins 15°C, pouvant être obtenus par transformation de
a) polyisocyanates A avec
b) des polybutadiénols B selon la revendication 5 ou 6,
c) le cas échéant d'autres composés C présentant au moins 2 atomes d'hydrogène réactif par rapport à isocyanate,
d) le cas échéant des catalyseurs D,
e) le cas échéant de l'eau E,
f) le cas échéant des agents gonflants physiques F,
g) le cas échéant d'autres adjuvants et/ou additifs G.

8. Utilisation de polybutadiénols selon la revendication 5 ou 6 pour la préparation de polyuréthanes présentant une température de transition vitreuse d'au moins 15°C.
